# EUROPEAN PATENT APPLICATION

(11) **EP 2 200 187 A1**
(43) Date of publication of application: **23.06.2010**
(21) Application number: 08837216.4
(22) Date of filing: 16.09.2008
(51) Int. Cl.: H04B 3/54, H04L 12/28

(54) **COMMUNICATION SYSTEM, COMMUNICATION APPARATUS AND COMMUNICATION TERMINAL**

(30) Priority: 10.10.2007 JP 2007264181
(71) Applicant: Sharp Kabushiki Kaisha, Osaka-shi, Osaka 545-8522 (JP)
(72) Inventor: KISHIDA, Hiroyuki c/o Sharp Kabushiki Kaisha, Osaka 545-8522 (JP)
(74) Representative: Treeby, Philip David William
(86) International application number: PCT/JP2008/066654
(87) International publication number: WO 2009/047965

(57) **Abstract**

A communication device allowing a communication terminal to readily additionally be provided in a communication network using a power line is provided. Processes performed by a CPU of a PLC adapter representing one manner of the communication device include the steps of activating a low pass filter by switching a relay (S431) when connection of a communication terminal to a service power outlet is detected (YES in step S414) and when a pairing request has been issued (YES in step S420), transmitting setting information (S432), and inactivating the low pass filter by switching the relay after setting of the setting information is completed (S450).

## Description

### TECHNICAL FIELD

The present invention relates to a technique for setting in communication equipment, information for identifying/determining a network in networks over which communication is established using a power line as a medium.

### BACKGROUND ART

In general, in a network utilizing a power line utilized in a house, regardless of whether speed is low or high, information is carried on the power line and hence interference with neighboring house(s) may occur. In order to avoid interference, a technique of using identification information indicating that only specific equipment belongs to the same network is employed.

For example, a method of manually setting identification information in equipment to be connected to a power line network is possible. According to this method, considerable load may be imposed on a user and erroneous setting such as erroneous entry may be made.

Alternatively, a method of automatically setting identification information is also possible. According to this method, as the identification information is carried on a power line, identification information for neighbor(s) is erroneously set.

Regarding setting of identification information, in order to solve the problem of erroneous setting, for example, Japanese Patent Laying-Open No. 2003-78456 (Patent Document 1) discloses a technique for storing identification information in a power outlet, having the identification information carried when a power cord is inserted in the power outlet of equipment and setting the identification information in the equipment. In addition, this document discloses a technique for preventing leakage of information to neighbor(s) by limiting a time period for reception of the identification information by the equipment.

In addition, Japanese Patent Laying-Open No. 2004-104338 (Patent Document 2) discloses a power line communication equipment setting device allowing setting of various parameters with assured security, without requiring special works in a house.

Meanwhile, a scheme for transmitting and receiving communication data in an encrypted manner such as IEEE (Institute of Electrical and Electronic Engineers) 802.11b/g/a or the like, representing communication standards for wireless LAN (Local Area Network), is also widely used.
Patent Document 1: Japanese Patent Laying-Open No. 2003-78456
Patent Document 2: Japanese Patent Laying-Open No. 2004-104338

### DISCLOSURE OF THE INVENTION

### PROBLEMS TO BE SOLVED BY THE INVENTION

The technique disclosed in Japanese Patent Laying-Open No. 2003-78456, however, suffers the following problems. First, as a scheme for having a house code carried on a power outlet is incorporated, works except for a case of new construction tend to be of a large scale. Therefore, such a scheme cannot readily be incorporated in already-built houses. In addition, considerable cost is required for adapting all power outlets in the house to that scheme.

Secondly, if only a specific power outlet is adapted to such a scheme above and if new equipment is to be additionally set, the equipment to be additionally set should be brought to a location of that power outlet. Therefore, a network in a house cannot be constructed in a flexible manner.

Thirdly, though this document describes the method of preventing an erroneous house code from being set in a terminal by limiting a time period for reception of a house code to be carried, it is silent about the risk of setting of house code information in equipment in a neighbor's house caused by having the power line carry the house code information or the risk of tapping of the house code by a third party.

The present invention was made to solve the above-described problems, and an object of the present invention is to provide a communication system capable of readily realizing construction of a communication network using a power line in a house while suppressing increase in cost. Another object is to provide a communication system allowing flexible construction of a network in a house. Another object is to provide a communication system capable of ensuring confidentiality of communication in a house.

Another object is to provide a communication device or a communication terminal capable of readily realizing construction of a communication network using a power line in a house. Another object is to provide a communication device or a communication terminal allowing flexible construction of a network in a house. Another object is to provide a communication device or a communication terminal capable of ensuring confidentiality of communication in a house.

### MEANS FOR SOLVING THE PROBLEMS

A communication system according to one aspect of the present invention includes a communication device and a communication terminal. The communication device includes a power supply plug unit configured to receive supply of electric power from a power line and to allow signal transmission, a modem unit configured to modulate and demodulate a signal, a storage unit configured to store setting information defining relation between a communication network through the power line and the communication device, a communication control unit configured to control communication through the power supply plug unit based on the setting information, a service power outlet unit configured to supply electric power to the outside of the communication device and to allow signal transmission, a filter unit configured to remove the setting information from a signal transmitted to the power supply plug unit, a sensing unit configured to sense timing of output of the setting information to the outside of the service power outlet unit, and a filter control unit configured to operate the filter unit in accordance with a result of sensing of the timing. The communication terminal includes a terminal power supply plug unit configured to receive supply of electric power from a power line and to transmit and receive a signal, an obtaining unit configured to obtain setting information defining relation between a communication network using the power line and the communication terminal from the signal received by the terminal power supply plug unit, a storage unit configured to store data, a registration unit configured to write the setting information in the storage unit of the communication terminal, and a communication control unit configured to control transmission and reception of the signal through the terminal power supply plug unit based on the setting information.

A communication device according to another aspect of the present invention includes a power supply plug unit configured to receive supply of electric power from a power line and to allow signal transmission, a modem unit configured to modulate and demodulate a signal, a storage unit configured to store setting information defining relation between a communication network through the power line and the communication device, a communication control unit configured to control communication through the power supply plug unit based on the setting information, a service power outlet unit configured to supply electric power to the outside of the communication device and to allow signal transmission, a filter unit configured to remove the setting information from the signal transmitted to the power supply plug unit, a sensing unit configured to sense timing of output of the setting information to the outside of the service power outlet unit, and a filter control unit configured to operate the filter unit in accordance with a result of sensing of the timing.

Preferably, the communication device further includes an input unit configured to accept input of a command to output the setting information to the service power outlet unit. The sensing unit is configured to sense the timing based on the input of the command.

Preferably, the sensing unit is configured to sense the timing based on connection of equipment to the service power outlet unit.

Preferably, the sensing unit is configured to detect a request for the setting information based on the signal received through the service power outlet unit and to sense the timing based on detection of the request.

Preferably, the communication device further includes a completion sensing unit configured to sense, based on the signal received through the service power outlet unit, completion of registration of the setting information in a device that has transmitted the received signal. The filter control unit is configured to end an operation of the filter unit based on sensing of the completion.

Preferably, the communication device further includes an interface unit configured to communicate a signal with the outside of the communication device. The modem unit is configured to convert a format of data sent from the interface unit into a format adapted to transmission through the power line and to convert a format of a signal sent from the power line into a format adapted to transmission through the interface unit.

Preferably, the communication device further includes a connection sensing unit configured to sense connection of a cable to the interface unit, and a switching unit configured to switch whether or not to output the setting information to the service power outlet unit in accordance with a result of sensing by the connection sensing unit.

Preferably, the communication device further includes a supply control unit configured to control electric power supply from the power supply plug unit to the service power outlet unit.

Preferably, the communication device further includes a request unit configured to request to a terminal connected to the service power outlet unit, terminal setting data defining relation between the communication network and the terminal, and an operation control unit configured to control an operation in accordance with the terminal setting data received from the terminal. The operation control unit is configured to transmit the setting information to the terminal when the terminal setting data has not been set or an initial state is set. The operation control unit is configured to cut off supply of electric power to the service power outlet unit when content in the terminal setting data is different from content in the setting information. The operation control unit is configured to maintain a current state of the communication device when the content in the terminal setting data is identical to the content in the setting information.

Preferably, the storage unit is configured to further store data defining an operation caused by the operation control unit in accordance with the terminal setting data. The operation control unit is configured to cause the operation in accordance with the defining data.

Preferably, the storage unit is configured to further store switch data for switching an operation mode of the service power outlet unit between a mode only for supplying electric power and a mode enabling sending of the setting information together with supply of electric power. The communication device further includes a mode control unit configured to switch between electric power transmission and signal transmission to the service power outlet unit based on the switch data.

Preferably, the communication device further includes a request detection unit configured to detect a request for pairing with the communication device based on a signal input to the communication device. The sensing unit is configured to sense the timing based on detection of the request. The filter control unit is configured to end an operation of the filter unit after the pairing is carried out.

Preferably, the setting information includes data specifying the communication network and data specifying the communication device.

A communication terminal according to another aspect of the present invention includes a terminal power supply plug unit configured to receive supply of electric power from a power line and to transmit and receive a signal, an obtaining unit configured to obtain setting information defining relation between a communication network using the power line and the communication terminal from the signal received by the terminal power supply plug unit, a storage unit configured to store data, a registration unit configured to write the setting information in the storage unit, and a communication control unit configured to control transmission and reception of the signal through the terminal power supply plug unit based on the setting information.

Preferably, the signal includes the setting information and a request for registration of the setting information. The obtaining unit is configured to detect the setting information and the request. The registration unit is configured to write the setting information in the storage unit based on detection of the request.

Preferably, the setting information includes data specifying the communication network and data specifying the communication terminal.

Preferably, the communication terminal further includes a sensing unit configured to sense reception of a request for transmission of the setting information, and a transmission unit configured to transmit the setting information to a sender of the request for transmission in response to reception of the request for transmission.

### EFFECTS OF THE INVENTION

According to the communication system of the present invention, construction of a communication network using a power line in a house can readily be realized while increase in cost is suppressed. In addition, a network in a house can be constructed in a flexible manner. Moreover, confidentiality of communication in a house can be ensured.

In addition, according to the communication device or the communication terminal of the present invention, construction of a communication network using a power line in a house can readily be realized. In addition, according to the communication device or the communication terminal in another aspect of the present invention, a network in a house can be constructed in a flexible manner. Moreover, according to the communication device or the communication terminal in another aspect, confidentiality of communication in a house can be ensured.

### BRIEF DESCRIPTION OF THE DRAWINGS

Fig. 1 is a block diagram showing a function implementing a communication system 10 according to an embodiment of the present invention.
Fig. 2 is a block diagram showing a hardware configuration of a PLC adapter 200 representing one manner of a communication device 100.
Fig. 3 is a diagram conceptually showing one manner of data storage in a flash ROM 230 of PLC adapter 200.
Fig. 4 is a flowchart showing a part of a series of operations caused by a CPU 210 of PLC adapter 200.
Fig. 5 is a block diagram showing a configuration of a communication system 50 according to a variation of the embodiment of the present invention.
Fig. 6 is a diagram conceptually showing one manner of data storage in a storage unit 164 of a communication terminal 150 according to the variation of the embodiment of the present invention.
Fig. 7 is a block diagram showing a function attained by a communication control unit 176 implementing communication terminal 150.
Fig. 8 is a diagram conceptually showing a configuration of a packet 800 transmitted from communication terminal 150.
Fig. 9 is a flowchart showing a part of a series of operations caused by a control unit 170 of communication terminal 150.
Fig. 10 is a block diagram showing a hardware configuration of a PLC adapter 1000 representing one manner of a communication device 500.
Fig. 11 is a block diagram showing a configuration of a function attained by a CPU 1010 implementing PLC adapter 1000.
Fig. 12 is a diagram conceptually showing a configuration of a confirmation message 1200 generated by CPU 1010.
Fig. 13 is a flowchart showing a part of a series of operations caused by CPU 1010 of PLC adapter 1000.

### DESCRIPTION OF THE REFERENCE SIGNS

10, 50 communication system; 190 power line; 218, 262 plug; 800 packet; and 1200 confirmation message.

### BEST MODES FOR CARRYING OUT THE INVENTION

An embodiment of the present invention will be described hereinafter with reference to the drawings. In the description below, the same elements have the same reference characters allotted. Their label and function are also identical. Therefore, detailed description thereof will not be repeated.

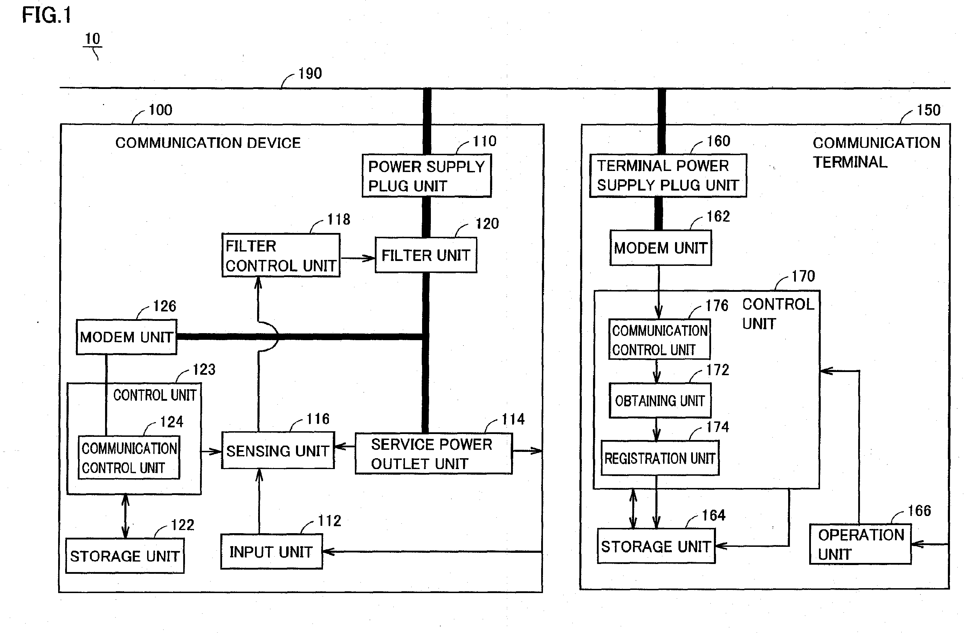

Referring to Fig. 1, a communication system 10 according to an embodiment of the present invention will be described. Fig. 1 is a block diagram showing a function implementing communication system 10. Communication system 10 includes a communication device 100 and a communication terminal 150. Communication device 100 and communication terminal 150 are connected to each other through a power line 190.

Communication device 100 includes a power supply plug unit 110, an input unit 112, a service power outlet unit 114, a sensing unit 116, a filter control unit 118, a filter unit 120, a storage unit 122, a control unit 123, and a modem unit 126. Control unit 123 includes a communication control unit 124.

Power supply plug unit 110 is connected to power line 190 and filter unit 120. Power supply plug unit 110 receives supply of electric power from power line 190 and allows passage of a signal.

Input unit 112 accepts input of an operation of communication device 100. Input unit 112 is implemented, for example, by such operation means as a button, a touch panel or the like provided in a front surface of a housing of communication device 100.

Service power outlet unit 114 is connected to sensing unit 116, filter unit 120, and modem unit 126. In addition, service power outlet unit 114 supplies electric power obtained by power supply plug unit 110 to the outside of communication device 100. Equipment to be connected to a common power outlet can be connected to service power outlet unit 114. The equipment includes, for example, such an electric appliance as a television set, a luminaire or the like, an information communication device such as a computer or the like, and the like. In addition, in one aspect, service power outlet unit 114 allows passage of a signal.

Storage unit 122 stores setting information defining relation between a communication network using power line 190 and communication device 100. The setting information includes an address of communication device 100 on power line 190 and a network ID (Identification) for identifying a communication network.

Control unit 123 is connected to storage unit 122, modem unit 126, and sensing unit 116. Specifically, control unit 123 is connected to sensing unit 116 and storage unit 122 and reads the setting information from storage unit 122. Communication control unit 124 is connected to modem unit 126 and controls communication through power supply plug unit 110 or service power outlet unit 114 based on the setting information.

Sensing unit 116 senses timing of output of the setting information to the outside of service power outlet unit 114. Filter control unit 118 controls filtering by filter unit 120 in accordance with a result of sensing of the timing by sensing unit 116. Filter unit 120 removes the setting information from a signal transmitted to power supply plug unit 110.

In one aspect, input unit 112 accepts input of a command to output the setting information to the outside of service power outlet unit 114. Sensing unit 116 senses the timing in response to the input of the command. Filter control unit 118 activates a filtering operation by filter unit 120 based on sensing of the timing by sensing unit 116.

In one aspect, sensing unit 116 senses connection of an information communication device to service power outlet unit 114 and senses the timing in response to sensing of that connection. For example, timing of variation of a current value or a voltage value before and after connection of the information communication device is sensed. Here, the information communication device includes a device for power line communication having a configuration similar to that of communication device 100.

In another aspect, sensing unit 116 detects a request for the setting information based on a signal received through service power outlet unit 114 and senses the timing based on detection of the request. This signal is emitted, for example, by a device for power line communication.

In another aspect, based on a signal received through service power outlet unit 114, sensing unit 116 senses completion of registration of the setting information in an information communication device that has transmitted the signal received through service power outlet unit 114. Filter control unit 118 ends the operation of filter unit 120 based on sensing of that completion.

Modem unit 126 is electrically connected to service power outlet unit 114, filter unit 120, and control unit 123. Modem unit 126 modulates and/or demodulates a signal transmitted from power supply plug unit 110 to control unit 123 or a signal transmitted from control unit 123 to power supply plug unit 110.

Referring again to Fig. 1, communication terminal 150 includes a terminal power supply plug unit 160, a modem unit 162, a storage unit 164, and a control unit 170. Control unit 170 includes an obtaining unit 172, a registration unit 174, and a communication control unit 176.

Terminal power supply plug unit 160 is connected to power line 190. Terminal power supply plug unit 160 receives supply of electric power from power line 190 and allows passage of a signal.

Modem unit 162 is arranged between terminal power supply plug unit 160 and control unit 170. Modem unit 162 modulates and/or demodulates a signal transmitted from terminal power supply plug unit 160 to control unit 170 or a signal transmitted from control unit 170 to terminal power supply plug unit 160.

Storage unit 164 stores data defining an operation of communication terminal 150. The data includes data for joining a communication network using power line 190 (for example, a network identification, an address, identification data of communication device 100, or the like).

Control unit 170 is configured to control an operation of communication terminal 150 based on at least any of data output from modem unit 162 and data stored in storage unit 164. More specifically, in control unit 170, obtaining unit 172 obtains setting information defining relation between a communication network using power line 190 and communication terminal 150 from a signal received by terminal power supply plug unit 160. Registration unit 174 writes the setting information in a memory area reserved in storage unit 164. Communication control unit 176 controls transmission and reception of a signal through terminal power supply plug unit 160, using the setting information stored in storage unit 164 and firmware or other programs prepared in advance for defining an operation of communication terminal 150. In another aspect, communication device 100 described above may also be able to function as communication terminal 150.

In addition, in yet another aspect, communication terminal 150 may transmit information possessed by communication terminal 150 in response to a request sent from the outside. An exemplary request is a request for transmission of data for joining a communication network described above. According to this aspect, the request is received by communication terminal 150 together with information specifying a sender. For example, the information specifying the sender is an identification number of equipment that has transmitted the request. This information is included in a header portion of a signal including the request.

When control unit 170 senses reception of the request, communication control unit 176 reads data stored in storage unit 164 (data for joining the communication network) in response to sensing of that reception and transmits the read data to the sender.

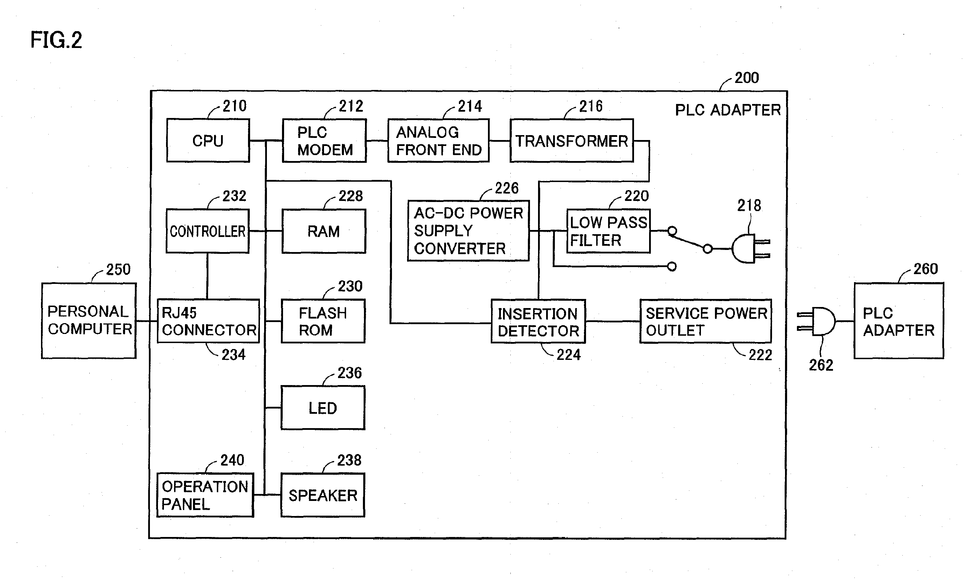

Referring to Fig. 2, a specific configuration of communication device 100 will be described. Fig. 2 is a block diagram showing a hardware configuration of a PLC (Power Line Communication) adapter 200 representing one manner of communication device 100. PLC adapter 200 includes a CPU (Central Processing Unit) 210, a PLC modem 212, an analog front end 214, a transformer 216, a plug 218, a low pass filter 220, a service power outlet 222, an insertion detector 224, an AC-DC (Alternating Current-Direct Current) power supply converter 226, a RAM (Random Access Memory) 228, a flash ROM (Read Only Memory) 230, an Ethernet (trademark) controller 232, an RJ (Registered Jack) 45 connector 234, an LED (Light Emitting Diode) 236, a speaker 238, and an operation panel 240. A personal computer 250 and other information communication devices can be connected to RJ45 connector 234. A plug 262 of a PLC adapter 260 can be attached to service power outlet 222.

CPU 210 controls an operation of PLC adapter 200 based on a command provided to PLC adapter 200 and data and a program stored in PLC adapter 200. Specifically, CPU 210 executes the command based on data stored in RAM 228 and flash ROM 230 and a program stored in flash ROM 230 and controls communication in accordance with the command.

PLC modem 212 converts data generated by CPU 210 or data obtained via Ethernet (trademark) controller 232 into a format for power line communication and outputs the resultant data to analog front end 214. In addition, PLC modem 212 extracts prepared data from a signal obtained from the power line through plug 218 and transmits the obtained data to CPU 210.

Analog front end 214 converts digital data output from PLC modem 212 into an analog signal and transmits the analog signal to transformer 216. In contrast, analog front end 214 converts an analog signal output from transformer 216 into digital data and sends the digital data to PLC modem 212.

Transformer 216 has the analog signal from analog front end 214 carried on the power line. In addition, transformer 216 extracts the signal on the power line and transmits the extracted signal to analog front end 214. Plug 218 is connected to a power outlet provided in a wall of a room where PLC adapter 200 is installed and receives supply of electric power from power line 190.

Low pass filter 220 removes a signal. An operation of low pass filter 220 is inactivated while the setting information is not transmitted. Such switching is made, for example, in response to a command from CPU 210.

Service power outlet 222 accepts insertion of a plug (for example, plug 262) of another device (for example, PLC adapter 260) receiving supply of electric power by PLC adapter 200.

Insertion detector 224 detects insertion of another plug in service power outlet 222. Insertion detector 224 sends a signal indicating detection to CPU 210.

AC-DC power supply converter 226 converts AC power supply provided to PLC adapter 200 into DC power supply and supplies the DC power supply to hardware constituting PLC adapter 200.

RAM 228 temporarily stores the data generated by CPU 210. In addition, RAM 228 stores also data externally obtained by Ethernet (trademark) controller 232.

Flash ROM 230 stores data and a program prepared in advance by a manufacturer of PLC adapter 200. In addition, flash ROM 230 stores also data obtained through communication via PLC adapter 200, as a result of a writing operation by CPU 210.

Ethernet (trademark) controller 232 controls communication between PLC adapter 200 and personal computer 250 connected to RJ45 connector 234 in accordance with a command output from CPU 210. Ethernet (trademark) controller 232 reads the data stored in RAM 228 and sends the data to RJ45 connector 234. In addition, when PLC adapter 200 receives data sent from personal computer 250, Ethernet (trademark) controller 232 writes the data sent from RJ45 connector 234 in an area reserved in RAM 228. CPU 210 refers to RAM 228 in response to an interrupt signal indicating completion of writing and reads the written data.

RJ45 connector 234 accepts attachment of a cable connected to personal computer 250 or another information communication device.

LED 236 performs an illumination operation or a blinking operation defined in advance, in response to a light emission command output from CPU 210. For example, LED 236 emits a signal indicating an operation state of PLC adapter 200 (normal communication, communication of the setting information, or pairing with another communication terminal). A user of PLC adapter 200 can recognize an operation state of PLC adapter 200 based on an illumination or blinking state.

Speaker 238 outputs sound defined in advance for notification of an operation of PLC adapter 200, in accordance with a signal output from CPU 210. For example, when an abnormal state is detected in PLC adapter 200, speaker 238 emits a buzzer sound for notification of the abnormal state.

Operation panel 240 accepts input for setting of PLC adapter 200. For example, setting for permitting or prohibiting transmission of the setting information by PLC adapter 200 is made in accordance with an operation of operation panel 240. When the user wishes to forcibly operate low pass filter 220, the operation thereof is forcibly switched in accordance with the operation of operation panel 240. Here, a command output from CPU 210 is inactivated.

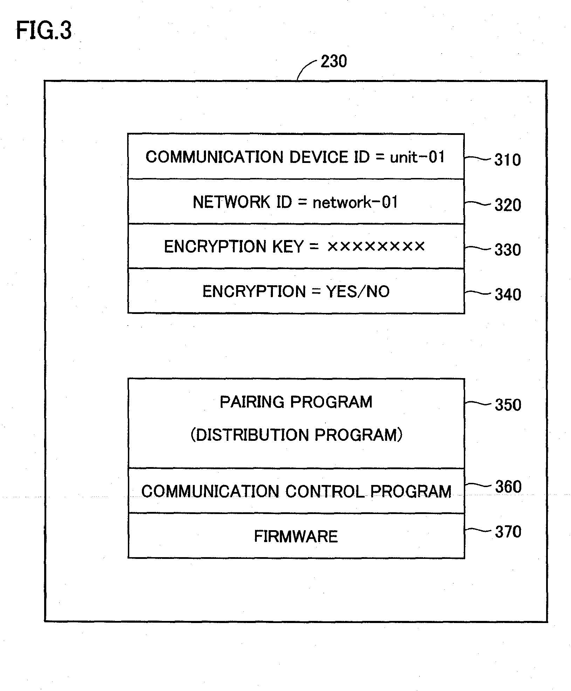

Referring next to Fig. 3, a data structure of PLC adapter 200 will be described. Fig. 3 is a diagram conceptually showing one manner of data storage in flash ROM 230. Flash ROM 230 includes a plurality of memory areas for storing data.

Data for realizing a communication network using power line 190 is stored in memory areas 310 to 340. Specifically, a communication device ID for identifying PLC adapter 200 is stored in memory area 310. A network ID for identifying a network which PLC adapter 200 joins is stored in memory area 320.

An encryption key used when PLC adapter 200 establishes encrypted communication with another communication terminal is stored in memory area 330. Setting data defining whether to establish encrypted communication or not is stored in memory area 340. It is noted that a scheme for encrypted communication is not particularly limited. Though encrypted data is preferably transmitted in consideration of characteristics of communication using power line 190, encrypted communication is not necessarily essential.

CPU 210 refers to the setting data stored in memory areas 310 to 340 and realizes communication using power line 190 connected to plug 218.

Programs controlling an operation of PLC adapter 200 are stored in memory areas 350 to 370. Specifically, a pairing program for association (pairing) between PLC adapter 200 and another communication terminal is stored in memory area 350. The pairing program includes a distribution program. When the distribution program is executed, the setting information stored in memory areas 310 to 340 is transmitted to a communication terminal to be paired. A communication control program for communicating with another communication terminal with which pairing has been completed is stored in memory area 360. Firmware controlling an operation of the hardware of PLC adapter 200 is stored in memory area 370.

CPU 210 executes the program stored in memory areas 350 to 370 and performs specific processing, in accordance with an operation or a command provided to PLC adapter 200.

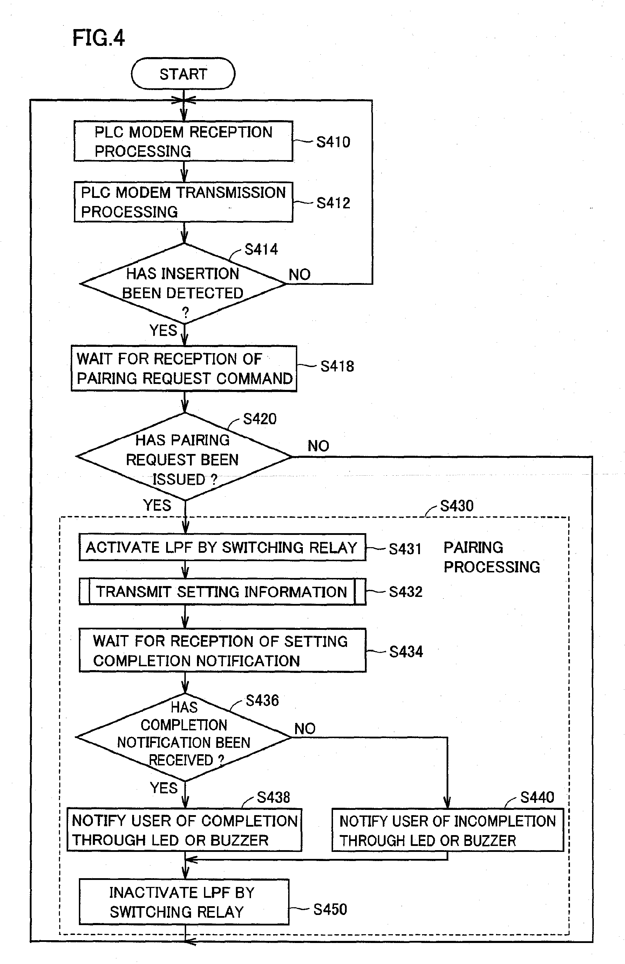

Referring next to Fig. 4, a control structure of PLC adapter 200 will be described. Fig. 4 is a flowchart showing an exemplary operation caused by CPU 210.

In step S410, CPU 210 of PLC adapter 200 receives a signal from power line 190 connected to plug 218 through PLC modem 212. In step S412, CPU 210 transmits a signal to power line 190 through PLC modem 212.

In step S414, CPU 210 determines whether another information communication device has been connected to service power outlet 222 or not, based on a signal from insertion detector 224. Specifically, for example, insertion detector 224 detects variation of a value of a current supplied to service power outlet 222. CPU 210 determines whether a plug has been inserted in service power outlet 222 or not, based on a result of detection of that variation. When CPU 210 determines that another plug has been inserted in service power outlet 22 (YES in step S414), CPU 210 switches the process to step S418. Otherwise (NO in step S414), CPU 210 returns control to step S410.

In step S418, CPU 210 waits for reception of a pairing request command provided to PLC adapter 200. In step S420, CPU 210 determines whether a pairing request has been issued or not, based on a signal provided to PLC adapter 200. When CPU 210 determines that a pairing request has been issued (YES in step S420), CPU 210 switches control to step S430. Otherwise (NO in step S420), CPU 210 switches control to step S410.

In step S430, CPU 210 performs pairing processing. More specifically, in step S431, CPU 210 switches a relay (not shown) connected to low pass filter 220 and activates an operation of low pass filter 220. In step S432, CPU 210 refers to flash ROM 230, reads the setting information stored in memory areas 310 to 340, and outputs the information. Here, as low pass filter 220 is operating, a signal containing this setting information is not supplied from plug 218 to the outside of PLC adapter 200, owing to a filtering operation. A communication terminal that has received this setting information causes its memory to store this information, so that a communication network with PLC adapter 200 can be established.

In step S434, CPU 210 waits for reception of notification of completion of registration of the setting information from the communication terminal. Specifically, CPU 210 determines whether the signal sent from service power outlet 222 contains the signal indicating that notification or not.

In step S436, CPU 210 determines whether it received notification of completion or not. When CPU 210 determines that it received notification of completion (YES in step S436), CPU 210 switches control to step S438. Otherwise (NO in step S436), CPU 210 switches control to step S440.

In step S438, CPU 210 issues a command to LED 236 to cause LED 236 to perform a blinking operation. Alternatively, CPU 210 sends an audio signal to speaker 238. Speaker 238 emits sound in response to the signal. The user of PLC adapter 200 can know that registration of the setting information in another communication terminal (for example, PLC adapter 260) has been completed.

In step S440, CPU 210 sends a signal different from the signal transmitted in step S438 to LED 236 or speaker 238. As LED 236 blinks in response to the signal or speaker 238 emits sound in response to the signal, the user can recognize that registration of the setting information in PLC adapter 260 is incomplete.

In step S450, CPU 210 inactivates low pass filter 220 by switching the relay. As a result, the data output by CPU 210 can all be transmitted to power line 190 through plug 218.

As described above, according to communication system 10 in the present embodiment, an operation of filter unit 120 is controlled in accordance with the timing of transmission of the setting information, so that whether transmission of the setting information for establishing a communication network using power line 190 to power line 190 is permitted or not is switched.

Specifically, in PLC adapter 200 constituting communication system 10, when PLC adapter 260 or the like representing one manner of other information communication devices is connected to service power outlet 222, low pass filter 220 performs a filtering operation. The setting information is cut off by low pass filter 220. Therefore, the setting information does not flow to power line 190 through plug 218.

During that period, PLC adapter 200 communicates with another PLC adapter 260 to thereby perform pairing processing. PLC adapter 260 receives supply of electric power from service power outlet 222 of PLC adapter 200 as well as setting information, and causes the memory to store the setting information. As a result, PLC adapter 260 can newly join a communication network using that network, that is, power line 190, as a constituent member of the communication network including PLC adapter 200.

The user of PLC adapter 260 can carry out pairing between PLC adapter 200 and PLC adapter 260 at a location where PLC 200 having the setting information has already been installed. After pairing is carried out, the user moves PLC adapter 260 to another room where it will be used and connects PLC adapter 260 to a power outlet provided in a wall of the room. PLC adapter 200 and PLC adapter 260 can thus communicate with each other through power line 190, over the same communication network. In addition, as the existing power outlet can be used, new work of the wall of the room is not necessary.

A new PLC adapter can thus readily be added to existing PLC adapter 200. In addition, during a period in which pairing processing is performed, the setting information does not flow to power line 190 and hence reception of the setting information by another device can be prevented. Thus, an information communication device establishing a communication network using a power line can readily additionally be provided while increase in cost and leakage of the setting information are prevented.

In another aspect, communication device 100 may have an interface unit for communicating with another communication terminal. Here, when the interface unit receives information sent from the communication terminal, that signal is sent to modem unit 126. Modem unit 126 converts a format of the signal into a format adapted to transmission through power line 190. In contrast, modem unit 126 converts a format of a signal sent from power line 190 into a format adapted to transmission to the communication terminal.

Here, sensing unit 116 may sense connection of a communication cable (for example, a LAN cable) to the interface unit. In this case, control unit 123 switches whether to output the setting information to service power outlet unit 114 or not, in accordance with a result of sensing. For example, when connection of the communication cable to the interface unit is sensed, control unit 123 outputs the setting information to service power outlet unit 114.

### <Variation>

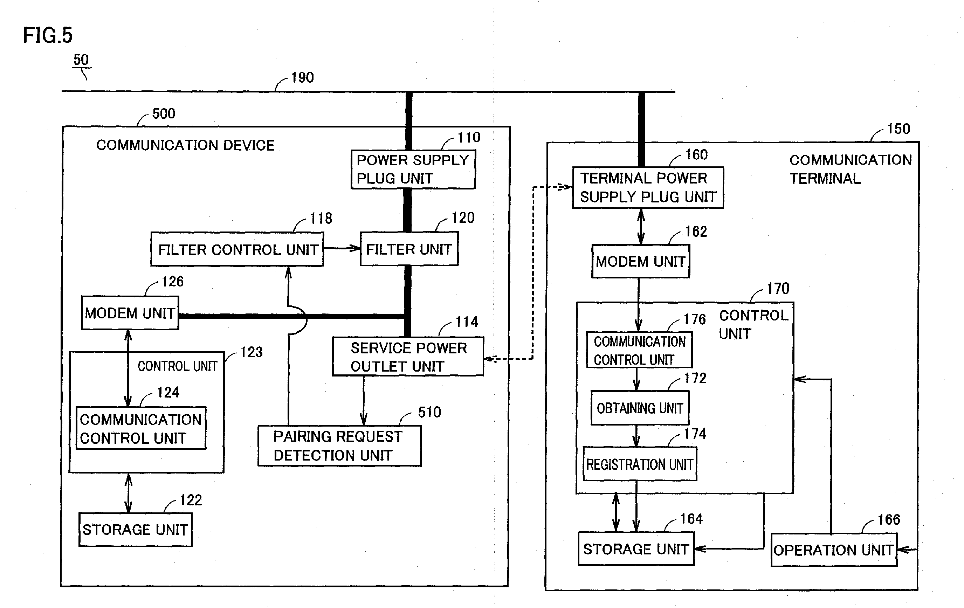

Referring to Fig. 5, a communication system 50 according to a variation of the present embodiment will be described. Fig. 5 is a block diagram showing a configuration of communication system 50. Communication system 50 includes a communication device 500 and communication terminal 150. Communication device 500 and communication terminal 150 can be connected to each other through power line 190. Communication terminal 150 can receive supply of electric power from communication device 500.

Communication device 500 according to the present variation switches a filter operation based on detection of a pairing request from a signal received through service power outlet 114. Namely, referring to Fig. 5, communication device 500 does not have input unit 112 and sensing unit 116, as compared with the configuration of communication device 100. Communication device 500 further includes a pairing request detection unit 510. Pairing request detection unit 510 is configured to operate based on output from power supply plug unit 110 and service power outlet unit 114. Filter control unit 118 is configured to operate based on output from pairing request detection unit 510.

Pairing request detection unit 510 detects a request for pairing with communication device 500 from a signal sent from power supply plug unit 110 or a signal sent from service power outlet unit 114. A result of detection by pairing request detection unit 510 is input to filter control unit 118. Filter control unit 118 activates filtering by filter unit 120 based on the input of a signal indicating detection of the pairing request.

More specifically, only when the signal from service power outlet unit 114 includes the pairing request, filter control unit 118 activates the filtering operation by filter unit 120. As a result, the setting information stored in storage unit 122 can be transmitted to the outside of communication device 500 through service power outlet unit 114, however, it is not transmitted from power supply plug unit 110 to power line 190.

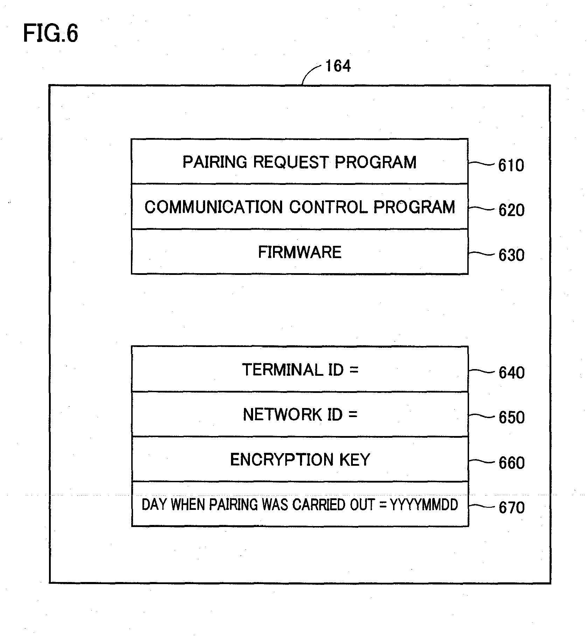

Referring next to Fig. 6, a data structure of communication terminal 150 according to the present variation will be described. Fig. 6 is a diagram showing one manner of data stored in storage unit 164. Storage unit 164 includes a plurality of memory areas for storing data. A program requesting pairing with a communication device (for example, communication device 500) is stored in a memory area 610. This program transmits a signal indicating a pairing request to a connected communication device and obtains data for establishing a communication network with that communication device from information received from that communication device.

A program for execution of communication processing by communication terminal 150 is stored in a memory area 620. Firmware controlling an operation of the hardware constituting communication terminal 150 is stored in a memory area 630. When communication control unit 176 executes the communication control program above, communication terminal 150 can communicate with communication device 500 after it is connected to power line 190.

An ID for identifying communication terminal 150 (a terminal ID) is stored in a memory area 640. For example, this terminal ID is written in a memory when communication terminal 150 is manufactured, and it has already been set when it is shipped as a product.

Setting information for communication using power line 190 is stored in memory areas 650 to 670. When communication terminal 150 has not yet carried out pairing, the setting information is not present in storage unit 164. Therefore, at this time point, a code "NULL" indicating that no specific data is present is stored in each of memory areas 650 to 670. Alternatively, mounting such that storage unit 164 has an initial value may be made.

On the other hand, as will be described later, when communication terminal 150 obtains the setting information by carrying out pairing with communication device 500, the obtained data is stored in each of memory areas 650 to 670. Specifically, identification data of a network established by communication system 50 is stored in memory area 650. When communication terminal 150 and communication device 500 establish encrypted communication, an encryption key is stored in memory area 660. Data representing time and day when communication terminal 150 carried out pairing is stored in memory area 670.

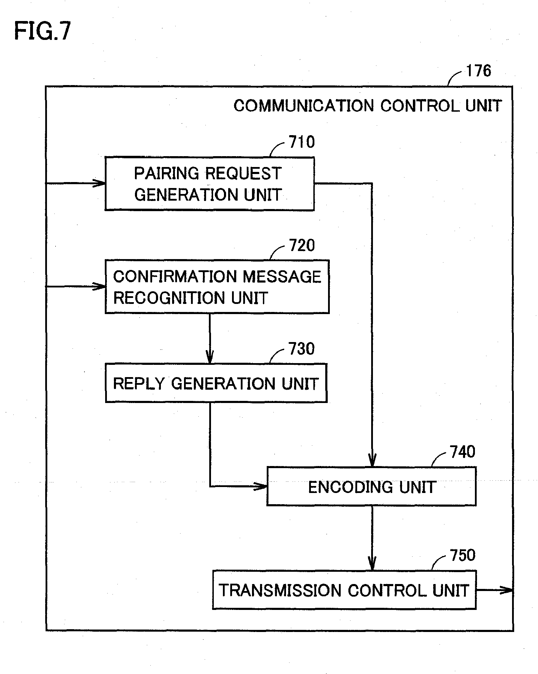

Referring to Fig. 7, communication control unit 176 implementing communication terminal 150 according to the present variation will be described. Fig. 7 is a block diagram showing a function attained by communication control unit 176. Communication control unit 176 includes a pairing request generation unit 710, a confirmation message recognition unit 720, a reply generation unit 730, an encoding unit 740, and a transmission control unit 750. In one aspect, these functions are implemented by cooperation of software and hardware. Namely, when a program configured to perform processing in accordance with each function is executed by a CPU or another processor, these functions are implemented. In another aspect, the communication terminal may be implemented by hardware such as combination of circuits that perform processing in accordance with each function.

Pairing request generation unit 710 generates a request for pairing between communication terminal 150 and communication device 500 based on an operation provided to operation unit 166. For example, when operation unit 166 senses the operation, operation unit 166 sends a signal in accordance with the operation to control unit 170. Control unit 170 confirms whether the signal corresponds to the pairing request or not. When control unit 170 confirms that the signal corresponds to the pairing request, control unit 170 serving as communication control unit 176 generates a pairing request.

As will be described later, confirmation message recognition unit 720 detects a message inquiring whether communication terminal 150 is a sender of the pairing request transmitted from communication device 500 or not.

Reply generation unit 730 generates a reply signal to confirmation message recognition unit 720. Encoding unit 740 encodes the pairing request generated by pairing request generation unit 710 or the reply signal generated by reply generation unit 730. Transmission control unit 750 sends a packet generated by encoding to modem unit 162 and transmits the packet to the outside of communication terminal 150.

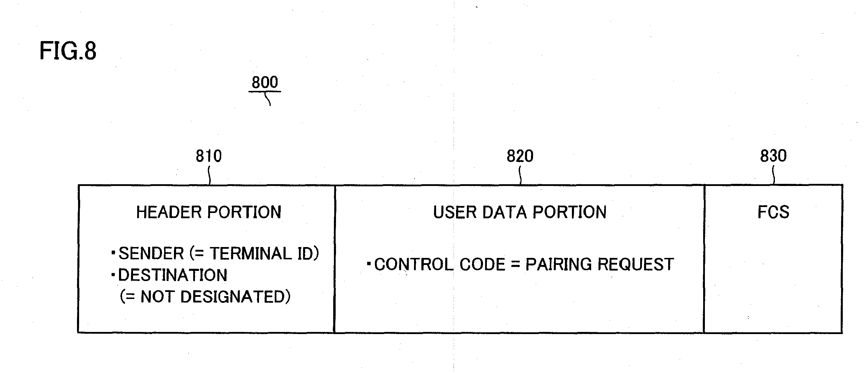

Here, referring to Fig. 8, a packet transmitted from communication terminal 150 will be described. Fig. 8 is a diagram conceptually showing a configuration of a packet 800 representing a pairing request. Packet 800 includes a header portion 810, a user data portion 820, and FCS (Frame Check Sequence) 830. Header 810 includes information indicating a sender and information indicating a destination. The information indicating the sender is, for example, a terminal ID of communication terminal 150 (memory area 640). The information indicating the destination is, for example, information indicating that no device is specified (for example, information indicating broadcast transmission).

User data portion 820 includes a control code representing specific contents in packet 800. The control code is, for example, a code defined in advance as a code representing a "pairing request". FCS 830 includes data for detecting and correcting a transmission error of packet 800.

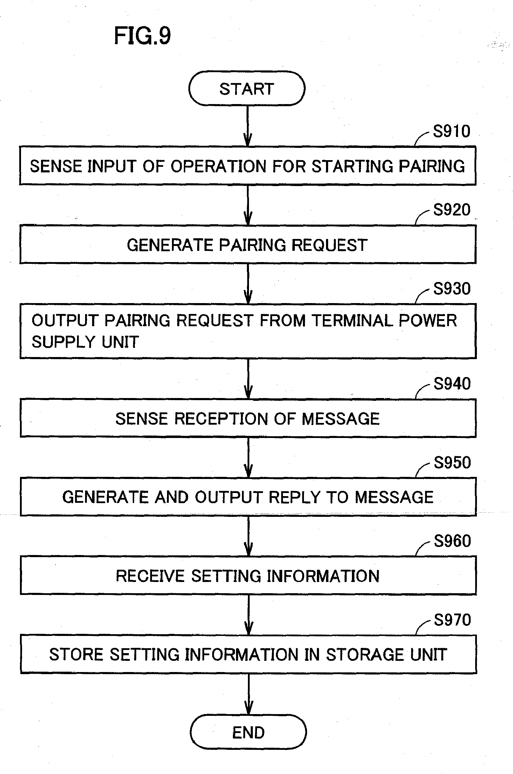

Referring next to Fig. 9, a control structure of communication terminal 150 according to the present variation will be described. Fig. 9 is a flowchart showing a part of a series of operations caused by control unit 170.

In step S910, control unit 170 senses input of an operation to start pairing, based on a signal from operation unit 166. In step S920, control unit 170 serving as communication control unit 176 generates a pairing request. In step S930, control unit 170 outputs the generated pairing request to the outside of communication terminal 150 through terminal power supply plug unit 160.

In step S940, control unit 170 serving as confirmation message recognition unit 720 senses reception of a message for confirming the pairing request. Control unit 170 refers to storage unit 164 in response to that sensing, confirms a flag indicating transmission of the pairing request, and determines whether communication terminal 150 is a sender of the pairing request or not. When control unit 170 confirms that a record of transmission of the pairing request is stored in storage unit 164, control unit 170 recognizes that communication terminal 150 is the sender of the pairing request.

In step S950, communication control unit 176 serving as reply generation unit 730 generates a response to the message and communication control unit 176 serving as transmission control unit 750 outputs that signal to the outside of communication terminal 150. This response is output from terminal power supply plug unit 160 and received by service power outlet unit 114 of communication device 500 to which the plug of communication terminal 150 is connected. Communication device 500 recognizes that communication terminal 150 is a sender of the pairing request based on the response, reads the setting information stored in storage unit 122, and transmits the setting information from service power outlet unit 114.

In step S960, control unit 170 serving as obtaining unit 172 senses reception of the setting information. In step S970, registration unit 174 causes the obtained setting information to be stored in the memory area reserved in storage unit 164 (memory areas 650 to 670). Pairing between communication terminal 150 and communication device 500 is thus completed.

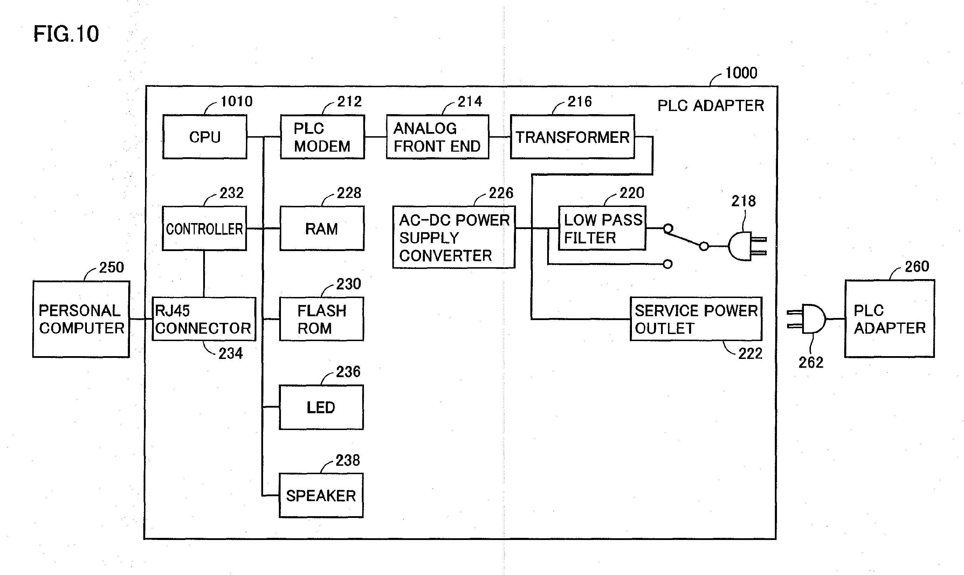

Referring next to Fig. 10, a specific configuration of communication device 500 will be described. Fig. 10 is a block diagram showing a hardware configuration of a PLC adapter 1000 representing one manner of communication device 500. PLC adapter 1000 does not have insertion detector 224 and CPU 210, as compared with the configuration of PLC adapter 200 shown in Fig. 2. PLC adapter 1000 includes a CPU 1010. As will be described later, CPU 1010 has a function to detect a pairing request from an externally provided signal and a function to transmit a confirmation message to that request.

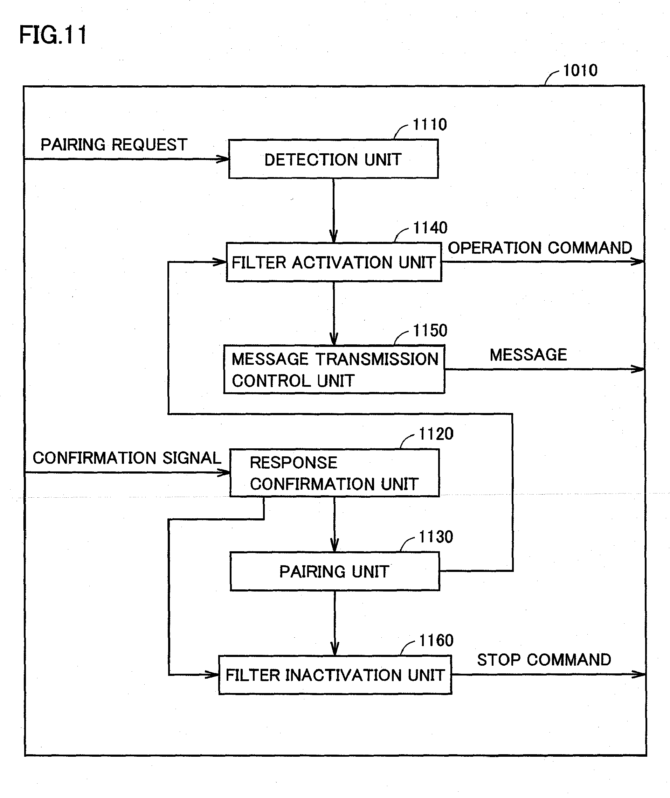

Referring then to Fig. 11, CPU 1010 implementing PLC adapter 1000 will be described. Fig. 11 is a block diagram showing a configuration of a function attained by CPU 1010. CPU 1010 includes a detection unit 1110, a response confirmation unit 1120, a pairing unit 1130, a filter activation unit 1140, a message transmission control unit 1150, and a filter inactivation unit 1160. These functions are implemented by execution by CPU 1010 of a program configured to cause processing in accordance with the function.

Detection unit 1110 detects a request for pairing with PLC adapter 1000 from a signal input to PLC adapter 1000. More specifically, detection unit 1110 detects a pairing request from a signal input from plug 218 or service power outlet 222. Response confirmation unit 1120 receives a signal of reply to an inquiry of the pairing request from the signal received via service power outlet 222. Response confirmation unit 1120 sends a result of confirmation to pairing unit 1130.

Pairing unit 1130 carries out pairing between a device that has transmitted the pairing request (for example, communication terminal 150) and PLC adapter 1000, based on a result of confirmation by response confirmation unit 1120. Specifically, pairing unit 1130 reads the setting information stored in flash ROM 230 and transmits the information to service power outlet 222. The device causes the memory to store input of the information.

Filter activation unit 1140 activates a filter operation by low pass filter 220 based on detection of the pairing request by detection unit 1110. Specifically, CPU 1010 transmits a signal to a relay of low pass filter 220, to thereby cause low pass filter 220 to perform the filtering operation.

Message transmission control unit 1150 generates a message inquiring about the sender of the pairing request, based on completion of filtering setting by filter activation unit 1140, and sends the message to PLC modem 212. Since this message is in a format, for example, that will be removed by low pass filter 220, it is not transmitted from plug 218 to power line 190.

When a reply signal to the pairing request confirmation message was not received or when contents in the signal are not suitable even if a reply signal was received, filter inactivation unit 1160 causes filtering to end by providing a stop command to low pass filter 220. Here, since pairing is not carried out, the setting information is not transmitted to the outside of PLC adapter 1000. On the other hand, when pairing by pairing unit 1130 was successful, filter inactivation unit 1160 determines that it is not necessary to transmit the setting information and causes low pass filter 220 to end filtering.

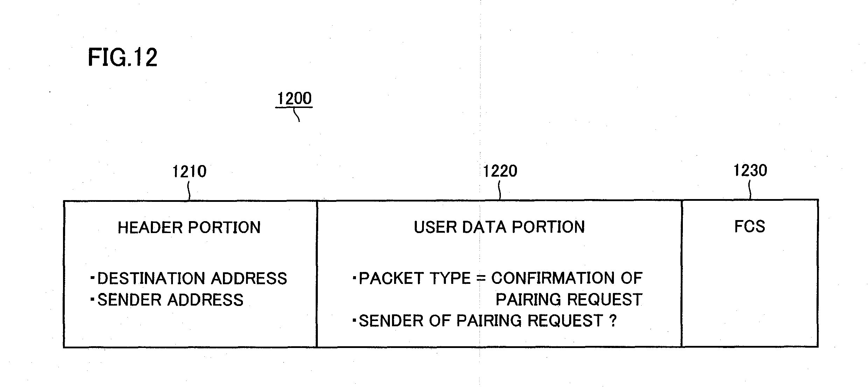

Referring to Fig. 12, a confirmation message 1200 generated by CPU 1010 will be described. Fig. 12 is a diagram conceptually showing a configuration of confirmation message 1200. Confirmation message 1200 includes a header portion 1210, a user data portion 1220, and FCS 1230. Header portion 1210 includes a destination address and a sender address. The destination address includes data indicating that confirmation message 1200 is not directed to a specific terminal (for example, data indicating broadcast transmission or multicast transmission). The sender address is, for example, an identification ID of PLC adapter 1000 or an address in communication system 50.

User data portion 1220 includes a code indicating a type of confirmation message 1200 and specific contents. For example, user data portion 1220 transmits a code indicating that confirmation message 1200 is a message for confirming a pairing request. This code is defined in advance in a communication system using PLC adapter 1000. User data portion 1220 further includes, as specific contents, data indicating that inquiry about the sender of the pairing request, of which reception was detected by CPU 1010, is being made. FCS 1230 has a function similar to that of FCS 830 shown in Fig. 8.

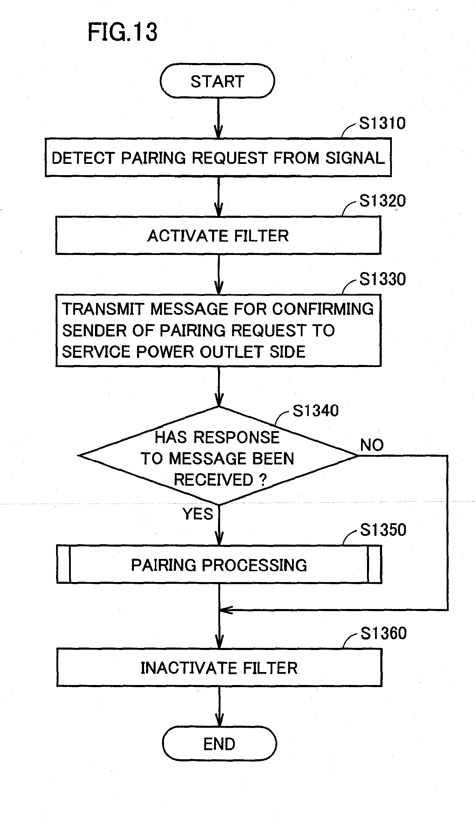

Referring to Fig. 13, a control structure of PLC adapter 1000 will be described. Fig. 13 is a flowchart showing a part of a series of operations run by CPU 1010.

In step S1310, CPU 1010 serving as detection unit 1110 detects a pairing request from a signal sent from PLC modem 212. In step S1320, CPU 1010 serving as filter activation unit 1140 sets filtering by low pass filter 220 to be active.

In step S1330, CPU 1010 serving as message transmission control unit 1150 transmits confirmation message 1200 for confirming the sender of the pairing request to service power outlet 222. Communication terminal 150 of which plug is connected to service power outlet 222 (specifically, PLC adapter 260) receives confirmation message 1200.

In step S 1340, CPU 1010 determines whether it received a response to confirmation message 1200 or not. When CPU 1010 determines that it received the response (YES in step S1340), CPU 1010 switches control to step S1350. Otherwise (NO in step S1340), CPU 1010 switches control to step S 1360. It is noted that criterion for determination is not limited to the above. In another aspect, in step S1340, even when CPU 1010 received the response, CPU 1010 may determine whether contents in the response satisfy predetermined conditions or not. Here, when the contents in the response satisfy the conditions (YES in step S1340), CPU 1010 switches control to step S1350. Otherwise (NO in step S1340), CPU 1010 switches control to step S1360.

In step S1350, CPU 1010 performs pairing processing. In step S1360, CPU 1010 serving as filter inactivation unit 1160 sets filtering by low pass filter 220 to be inactive.

As described above, according to communication system 50 in the present variation, communication device 500 controls a filtering operation for controlling whether to permit transmission of the setting information or not, in accordance with the pairing request sent from communication terminal 150 that is going to newly establish a network.

Specifically, when PLC adapter 1000 representing one manner of communication device 500 detects a pairing request sent from PLC adapter 260 connected to service power outlet 222, PLC adapter 1000 activates an operation of low pass filter 220. When low pass filter 220 starts the filtering operation, the setting information held by PLC adapter 1000 does not flow to the outside of PLC adapter 1000 through plug 218.

Meanwhile, PLC adapter 1000 carries out pairing with PLC adapter 260 that has transmitted the pairing request, by transmitting the setting information through service power outlet 222.

Thus, in a communication network using power line 190, PLC adapter 260 can readily be added to the communication network while preventing leakage of the setting information.

In another aspect, communication device 500 may switch an operation in accordance with terminal setting data of communication terminal 150 connected to service power outlet unit 114. An operation to be switched includes, for example, newly making setting for pairing in communication terminal 150, cutting off power supply for service power outlet unit 114, and doing nothing in particular for communication terminal 150. Such switching is made, for example, based on control data stored in storage unit 122. In this case, the control data is data obtained by associating data representing a result of comparison with data representing processing performed in accordance with the result (for example, transmission of the setting information). Control unit 123 refers to the control data in light of the result of comparison and performs processing specified by the result of comparison.

In order to make such switching, communication device 500 according to another aspect further includes a request unit for requesting terminal setting data to communication terminal 150 and an operation control unit for controlling an operation in accordance with the terminal setting data. Here, the terminal setting data defines relation between a communication network and communication terminal 150.

In this case, in communication terminal 150, for example, the following two patterns are possible as patterns for setting of the terminal setting data. The first pattern refers to a state where an initial value has been set. In this case, data for joining a specific communication network is not set in storage unit 164 of communication terminal 150. The second pattern refers to a state that some kind of terminal setting data is stored in storage unit 164. Here, communication terminal 150 can communicate by joining some kind of communication network.

When communication device 500 receives terminal setting data from communication terminal 150, communication device 500 compares the setting information that communication device 500 itself has with the received terminal setting data. Results of comparison include, for example, the following three cases. Communication device 500 performs an operation defined in advance, based on a result of comparison.

First, when the terminal setting data has an initial value (corresponding to the first pattern above), communication device 500 senses the fact that communication terminal 150 does not have setting for joining a communication network. In this case, communication device 500 can make setting for newly joining the communication network in communication terminal 150. For example, communication device 500 transmits the setting information to communication terminal 150. Communication terminal 150 causes storage unit 164 to store the setting information as terminal setting data. Communication terminal 150 can thus join the communication network which communication device 500 has been joining.

The second and third cases are realized when a status of the terminal setting data corresponds to the "second pattern" above.

Namely, in the second case, when contents in the terminal setting data do not match with contents in the setting information, communication device 500 senses the fact that a communication network which communication terminal 150 can join is different from a communication network which communication device 500 can join. In this case, communication device 500 can transmit the setting information that communication device 500 itself has to communication terminal 150. When communication terminal 150 receives the setting information, the contents in the terminal setting data are changed to the contents in the setting information. Therefore, communication terminal 150 can join the communication network which communication device 500 can join. Alternatively, communication device 500 does not have to transmit the setting information to communication terminal 150. In this case, as the contents in the terminal setting data are not changed, the communication network which communication terminal 150 can join is not changed. Here, communication device 500 may detect connection of a terminal belonging to a different communication network and cut off supply of electric power.

Alternatively, in the third case, when contents in the terminal setting data are the same as contents in the setting information, communication device 500 does not transmit the setting information to communication terminal 150. As the communication network which communication terminal 150 can join is the same as the communication network which communication device 500 can join, communication device 500 and communication terminal 150 can communicate with each other through that communication network.

In yet another aspect, communication device 500 may have setting for switching a manner of use of service power outlet unit 114 between use only for supply of electric power and use for transmission of the setting information in addition to supply of electric power. For example, in communication device 500 according to this aspect, storage unit 122 holds data specifying any manner of use. Control unit 123 can refer to that data and switch between use only for supply of electric power through service power outlet unit 114 and use for transmission of the setting information in addition to supply of electric power.

In the embodiment and the variation above, operations of PLC adapters 200, 260 and 1000 are described as manners of execution by a CPU representing one manner of processors, of a program for causing each process, that is, as an operation based on cooperation of software and hardware, however, the operations may be realized in another manner. For example, the operation may be realized as an operation of hardware, as combination of circuit elements performing each process.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A communication system, comprising:
a communication device (100); and
a communication terminal (150),
said communication device including
a power supply plug unit (110) configured to receive supply of electric power from a power line and to allow signal transmission,
a modem unit (126) configured to modulate and demodulate a signal,
a storage unit (122) configured to store setting information defining relation between a communication network through said power line and said communication device,
a communication control unit (124) configured to control communication through said power supply plug unit based on said setting information,
a service power outlet unit (114) configured to supply electric power to outside of said communication device and to allow signal transmission,
a filter unit (120) configured to remove said setting information from the signal transmitted to said power supply plug unit,
a sensing unit (116) configured to sense timing of output of said setting
information to outside of said service power outlet unit, and
a filter control unit (118) configured to operate said filter unit in accordance with a result of sensing of said timing, and
said communication terminal including
a terminal power supply plug unit (160) configured to receive supply of electric power from a power line and to transmit and receive a signal,
an obtaining unit (172) configured to obtain setting information defining relation between a communication network using said power line and said communication terminal from the signal received by said terminal power supply plug unit,
a storage unit (164) configured to store data,
a registration unit (174) configured to write said setting information in said storage unit of said communication terminal, and
a communication control unit (176) configured to control transmission and reception of the signal through said terminal power supply plug unit based on said setting information.

2. A communication device (100), comprising:
a power supply plug unit (110) configured to receive supply of electric power from a power line and to allow signal transmission;
a modem unit (126) configured to modulate and demodulate a signal;
a storage unit (122) configured to store setting information defining relation between a communication network through said power line and said communication device;
a communication control unit (124) configured to control communication through said power supply plug unit based on said setting information;
a service power outlet unit (114) configured to supply electric power to outside of said communication device and to allow signal transmission;
a filter unit (120) configured to remove said setting information from the signal transmitted to said power supply plug unit;
a sensing unit (116) configured to sense timing of output of said setting information to outside of said service power outlet unit; and
a filter control unit (118) configured to operate said filter unit in accordance with a result of sensing of said timing.

3. The communication device according to claim 2, further comprising an input unit (112) configured to accept input of a command to output said setting information to said service power outlet unit, wherein
said sensing unit is configured to sense said timing based on the input of said command.

4. The communication device according to claim 2, wherein
said sensing unit is configured to sense said timing based on connection of equipment to said service power outlet unit.

5. The communication device according to claim 2, wherein
said sensing unit is configured to detect a request for said setting information based on the signal received through said service power outlet unit and to sense said timing based on detection of said request.

6. The communication device according to claim 2, further comprising a completion sensing unit configured to sense, based on the signal received through said service power outlet unit, completion of registration of said setting information in a device that has transmitted received said signal, wherein
said filter control unit is configured to end an operation of said filter unit based on sensing of said completion.

7. The communication device according to claim 2, further comprising an interface unit configured to communicate a signal with the outside of said communication device, wherein
said modem unit is configured to convert a format of data sent from said interface unit into a format adapted to transmission through said power line and to convert a format of a signal sent from said power line into a format adapted to transmission through said interface unit.

8. The communication device according to claim 7, further comprising:
a connection sensing unit configured to sense connection of a cable to said interface unit; and
a switching unit configured to switch whether to output said setting information to said service power outlet unit in accordance with a result of sensing by said connection sensing unit.

9. The communication device according to claim 2, further comprising a supply control unit configured to control electric power supply from said power supply plug unit to said service power outlet unit.

10. The communication device according to claim 2, further comprising:
a request unit configured to request to a terminal connected to said service power outlet unit, terminal setting data defining relation between said communication network and said terminal; and
an operation control unit configured to control an operation in accordance with said terminal setting data received from said terminal, wherein
said operation control unit is configured to transmit said setting information to said terminal when said terminal setting data has not been set or an initial state is set,
said operation control unit is configured to cut off supply of electric power to said service power outlet unit when content in said terminal setting data is different from content in said setting information, and
said operation control unit is configured to maintain a current state of said communication device when the content in said terminal setting data is identical to the content in said setting information.

11. The communication device according to claim 10, wherein
said storage unit is configured to further store data defining an operation caused by said operation control unit in accordance with said terminal setting data, and
said operation control unit is configured to cause said operation in accordance with said defining data.

12. The communication device according to claim 2, wherein
said storage unit is configured to further store switch data for switching an operation mode of said service power outlet unit between a mode only for supplying electric power and a mode enabling sending of said setting information together with supply of electric power, and
said communication device further comprises a mode control unit configured to switch between electric power transmission and signal transmission to said service power outlet unit based on said switch data.

13. The communication device according to claim 2, further comprising a request detection unit configured to detect a request for pairing with said communication device based on a signal input to said communication device, wherein
said sensing unit is configured to sense said timing based on detection of said request, and
said filter control unit is configured to end an operation of said filter unit after said pairing is carried out.

14. The communication device according to claim 2, wherein
said setting information includes data specifying said communication network and data specifying said communication device.

15. A communication terminal (150), comprising:
a terminal power supply plug unit (160) configured to receive supply of electric power from a power line and to transmit and receive a signal;
an obtaining unit (172) configured to obtain setting information defining relation between a communication network using said power line and said communication terminal from the signal received by said terminal power supply plug unit;
a storage unit (164) configured to store data;
a registration unit (174) configured to write said setting information in said storage unit; and
a communication control unit (176) configured to control transmission and reception of the signal through said terminal power supply plug unit based on said setting information.

16. The communication terminal according to claim 15, wherein
said signal includes said setting information and a request for registration of said setting information,
said obtaining unit is configured to detect said setting information and said request, and
said registration unit is configured to write said setting information in said storage unit based on detection of said request.

17. The communication terminal according to claim 15, wherein
said setting information includes data specifying said communication network and data specifying said communication terminal.

18. The communication terminal according to claim 15, further comprising:
a sensing unit configured to sense reception of a request for transmission of said setting information; and
a transmission unit configured to transmit said setting information to a sender of said request for transmission in response to reception of said request for transmission.
